# EUROPEAN PATENT APPLICATION

(11) **EP 4 509 823 A1**
(43) Date of publication of application: **19.02.2025**
(21) Application number: 22937524.1
(22) Date of filing: 12.12.2022
(51) Int. Cl.: G01N 21/91, G01N 21/952

(54) **SURFACE INSPECTION DEVICE AND SURFACE INSPECTION METHOD**

(30) Priority: 13.04.2022 JP 2022066522
(71) Applicant: NIPPON STEEL CORPORATION, Chiyoda-ku Tokyo 100-8071 (JP)
(72) Inventor: NAKATA, Takeo, Tokyo 100-8071 (JP); MASAKA, Takeshi, Tokyo 100-8071 (JP); SUGIURA, Koki, Tokyo 100-8071 (JP); OTA, Yoshiyuki, Tokyo 100-8071 (JP)
(74) Representative: Vossius & Partner Patentanwälte Rechtsanwälte mbB
(86) International application number: PCT/JP2022/045663
(87) International publication number: WO 2023/199549

(57) **Abstract**

A magnetization unit magnetizes an object to be inspected. A magnetic powder adhesion unit applies a magnetic powder liquid and adheres magnetic powder to the magnetized object. An illumination unit illuminates a space containing the object with ultraviolet light. A first optical filter transmits a first wavelength that is a wavelength of the ultraviolet light. A second optical filter transmits a second wavelength that is a wavelength of excitation light of the magnetic powder undergoing excitation by the ultraviolet light. An image capture unit captures an image of a surface of the object to which the magnetic powder is adhered, in the space illuminated with the ultraviolet light, via the first optical filter and generates a first captured image, and captures an image of the surface of the object to which the magnetic powder is adhered via the second optical filter and generates a second captured image. An inspection unit inspects a visible first surface property of the surface of the object based on the first captured image, and inspects a second surface property of the surface of the object based on the second captured image, the second surface property being visually identifiable by magnetic particle inspection.

## Description

### TECHNICAL FIELD

The present disclosure relates to a surface inspection device and a surface inspection method, and more specifically relates to a surface inspection device and a surface inspection method that use images to inspect surface properties of objects.

### BACKGROUND ART

In a magnetic particle inspection, an object to be inspected is magnetized and a magnetic powder liquid is applied to the magnetized object. Magnetic flux leaks from the magnetized object at exposed and unexposed damage portions, and the applied magnetic powder adheres to the damage portions. When ultraviolet light is illuminated, the magnetic powder produces excitation light and light-emitting regions are visible as patterns of damage. An inspector performs a visual examination of the damage patterns in a dark room, inspecting surface properties of the object. Diverse shapes and patterns of damage may be observed in a magnetic particle inspection. These shapes and patterns may resemble spurious patterns that are caused by pooling of the magnetic powder liquid and such. The inspector must distinguish damage patterns from spurious patterns and ascertain which are harmful and which are harmless. However, these judgments are extremely difficult and greatly depend on the skill of the inspector. In addition, magnetic particle inspection is a task that takes a long time in a dark room, and the inspection work is challenging. Furthermore, when the shape of an object is complicated, the inspection work is even more difficult. As a result, an object may pass a magnetic particle inspection by an inspector with surface damage being overlooked, which may result in serious complaints from customers. Accordingly, there are calls to automate magnetic particle inspection work.

In addition to blemishes that are the subject of a magnetic particle inspection, there are also defects that occur at an object surface to which magnetic powder does not adhere in a magnetic particle inspection, such as handling marks, base metal surface residue, surface roughness and the like. Because these defects have large opening widths or shapes the same as the product surface, and little or no leakage flux occurs at these defects, magnetic particle inspection may not be applicable to them in practice. Ordinarily, these defects are illuminated with usual illumination such as, for example, visible light illumination or the like and are examined visually or with a camera.

Heretofore, a magnetic particle inspection and an inspection (below referred to as a normal inspection) for defects other than blemishes that are the subject of magnetic particle inspection must be carried out separately, regardless of whether each inspection is conducted visually by an inspector or automatically with a camera.

Various proposals have been made in relation to magnetic particle inspections. For example, Japanese Patent Application Laid-Open (JP-A) No. 2000-258398 proposes a method for carrying out a magnetic particle inspection and a penetrant inspection in parallel or simultaneously, in which ultraviolet light illumination and white light illumination are deployed to obtain suitable images for the respective inspections. In the method recited in JP-A No. 2000-258398, during a magnetic particle inspection, an image of a test specimen illuminated with ultraviolet light is captured with a video camera via a UV-reduction filter, which may improve contrast in the obtained image.

JP-A No. 2007-17376 proposes a method for carrying out a magnetic particle inspection and a normal inspection in parallel or simultaneously, in which ultraviolet light illumination and white light illumination are deployed to obtain suitable images for the respective inspections. In the method recited in JP-A No. 2007-17376, the images during the respective inspections are acquired at different timings. In addition in the method recited in JP-A No. 2007-17376, a long pass filter that transmits fluorescent colors and visible light is employed.

### SUMMARY OF INVENTION

### TECHNICAL PROBLEM

However, in both the methods of JP-A Nos. 2000-258398 and 2007-17376, steps of preparing two kinds of illumination, switching between the two kinds of illumination and capturing images are necessary. That is, both the methods of JP-A Nos. 2000-258398 and 2007-17376 include steps to be carried out in different environments with the type of illumination being switched. Moreover, when a long pass filter is employed as in the method of JP-A No. 2007-17376, wavelength components included in the kinds of illumination used for magnetic particle inspection and for normal inspection are mixed together. As a result, contrast in the obtained images is reduced.

Accordingly, an object of the present disclosure is to provide a surface inspection device and a surface inspection method that may integrate and carry out a magnetic particle inspection and a normal inspection in the same environment.

### SOLUTION TO PROBLEM

A first aspect of the present disclosure is a surface inspection device including: a magnetization unit that magnetizes an object to be inspected; a magnetic powder adhesion unit that applies a magnetic powder liquid and causes magnetic powder to be adhered to the magnetized object; an illumination unit that illuminates a space containing the object with ultraviolet light; a first optical filter that transmits a first wavelength that is a wavelength of the ultraviolet light; a second optical filter that transmits a second wavelength that is a wavelength of excitation light of the magnetic powder undergoing excitation by the ultraviolet light; an image capture unit that captures an image of a surface of the object to which the magnetic powder is adhered in the space illuminated with the ultraviolet light via the first optical filter and generates a first captured image, and that captures an image of the surface of the object to which the magnetic powder is adhered via the second optical filter and generates a second captured image; and an inspection unit that inspects a first surface property of the surface of the object based on the first captured image, the first surface property being visible, and inspects a second surface property of the surface of the object based on the second captured image, the second surface property being visually identifiable by magnetic particle inspection.

In a second aspect of the present disclosure, the surface inspection device according to the first aspect further includes a rotation mechanism that causes the object to rotate about a rotation axis in a direction orthogonal to an optical axis of the image capture unit, wherein, at intervals of a predetermined period of the rotation of the object by the rotation mechanism, the image capture unit switches between processing that captures the image of the object to which the magnetic powder is adhered via the first optical filter and generates the first captured image and processing that captures the image of the object to which the magnetic powder is adhered via the second optical filter and generates the second captured image.

In a third aspect of the present disclosure, in the surface inspection device according to the first aspect or the second aspect, the image capture unit includes: a first image capture unit that generates the first captured image; a second image capture unit that generates the second captured image; and an optical member that causes reflected light from the surface of the object to which the magnetic powder is adhered in the space illuminated with the ultraviolet light to be incident on the first image capture unit via the first optical filter, and that causes excitation light from the surface of the object to which the magnetic powder is adhered to be incident on the second image capture unit via the second optical filter.

A fourth aspect of the present disclosure is a surface inspection method including: a magnetization step of magnetizing an object to be inspected; a magnetic powder adhesion step of applying a magnetic powder liquid and causing magnetic powder to be adhered to the magnetized object; an illumination step of illuminating a space containing the object with ultraviolet light; an image capture step of generating a first captured image and a second captured image, the image capture step including using a first optical filter that transmits a first wavelength that is a wavelength of the ultraviolet light, a second optical filter that transmits a second wavelength that is a wavelength of excitation light of the magnetic powder undergoing excitation by the ultraviolet light, and an image capture unit, capturing an image of a surface of the object to which the magnetic powder is adhered in the space illuminated with the ultraviolet light via the first optical filter for generating the first captured image, and capturing an image of the surface of the object to which the magnetic powder is adhered via the second optical filter for generating the second captured image; and an inspection step of inspecting a first surface property of the surface of the object based on the first captured image, the first surface property being visible, and inspecting a second surface property of the surface of the object based on the second captured image, the second surface property being visually identifiable by magnetic particle inspection.

In a fifth aspect of the present disclosure, in the surface inspection method according to the fourth aspect further includes a rotation step of causing the object to rotate about a rotation axis in a direction orthogonal to an optical axis of the image capture unit, wherein the image capture step includes, at intervals of a predetermined period of the rotation of the object by the rotation step, switching between processing that captures the image of the object to which the magnetic powder is adhered via the first optical filter and generates the first captured image and processing that captures the image of the object to which the magnetic powder is adhered via the second optical filter and generates the second captured image.

In a sixth aspect of the present disclosure, in the surface inspection method according to the fourth aspect or the fifth aspect, the image capture unit includes a first image capture unit that generates the first captured image, and a second image capture unit that generates the second captured image, and the image capture step includes: using an optical member; causing reflected light from the surface of the object to which the magnetic powder is adhered in the space illuminated with the ultraviolet light to be incident on the first image capture unit via the first optical filter; causing excitation light from the surface of the object to which the magnetic powder is adhered to be incident on the second image capture unit via the second optical filter; and generating the first captured image and the second captured image.

### ADVANTAGEOUS EFFECTS OF INVENTION

According to the present disclosure, a surface inspection device and surface inspection method are provided that may integrate and carry out a magnetic particle inspection and a normal inspection in the same environment.

### BRIEF DESCRIPTION OF DRAWINGS

Fig. 1 is a diagram showing general structures of a surface inspection device according to an exemplary embodiment and an object.
Fig. 2 is a view showing an example of a filter apparatus.
Fig. 3 is a view showing an example of transmission properties of a first optical filter and a second optical filter.
Fig. 4 is a diagram for explaining disposition of an image capture apparatus.
Fig. 5 is a schematic plan view of a positional relationship of respective structures.
Fig. 6 is a functional block diagram of a processing apparatus.
Fig. 7 is a diagram for describing a state for capturing a normal inspection image.
Fig. 8 is a diagram for describing a state for capturing a magnetic particle inspection image.
Fig. 9 is a view showing an example of a normal inspection image of an actual sample.
Fig. 10 is a view showing an example of a magnetic particle inspection image of the actual sample.
Fig. 11 is a block diagram showing hardware structures of a processing apparatus.
Fig. 12 is a flowchart showing a flow of surface inspection processing.
Fig. 13 is a diagram showing a portion of general structures of a first variant example.
Fig. 14 is a diagram showing a portion of general structures of a second variant example.
Fig. 15 is a plan view of a portion of general structures of a third variant example.

### DETAILED DESCRIPTION

Below, an example of an embodiment of the present disclosure is described with reference to the drawings.

### - Descriptions of a magnetic particle inspection and a normal inspection -

In the present exemplary embodiment, a surface inspection device is described that integrates and carries out, in the same environment, a magnetic particle inspection and a normal inspection of surface properties of an object to be inspected. The magnetic particle inspection provides an inspection of, among defects at the surface of the object, microscopic blemishes that are hard to see with the naked eye (below referred to as "magnetic powder blemishes") such as subsurface damage and the like. The normal inspection provides an inspection of, among defects at the surface of the object, defects (below referred to as "normal defects") other than magnetic particle blemishes, such as damage at the visible scale, base metal surface residue, surface roughness and the like. The normal defects referred to here are an example of a first surface property of the present disclosure and the magnetic powder blemishes are an example of a second surface property of the present disclosure.

### - Description of structures of surface inspection device 10 -

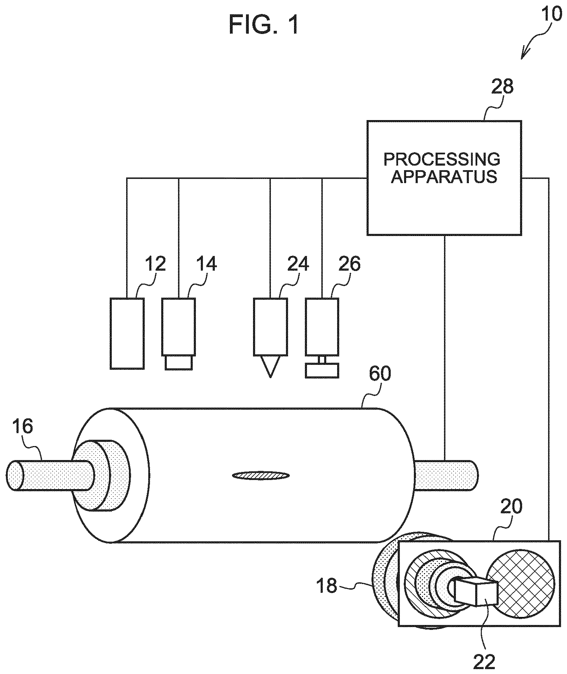

Fig. 1 is a diagram showing general structures of a surface inspection device 10 according to the present exemplary embodiment of the disclosure and an object 60 that is a target of inspection of surface properties. The object 60 is a ferromagnetic body. The present exemplary embodiment is described for a situation in which the object 60 is a cylindrical object such as, for example, a vehicle wheel, a crankshaft or the like.

As shown in Fig. 1, the surface inspection device 10 includes a magnetization apparatus 12, a magnetic powder adhesion apparatus 14, a rotation mechanism 16, an illumination apparatus 18, a filter apparatus 20, an image capture apparatus 22, a marking apparatus 24, a repair apparatus 26 and a processing apparatus 28.

The magnetization apparatus 12 is an apparatus that magnetizes the object 60 that is a ferromagnetic body. The magnetization apparatus 12 is an example of a magnetization unit of the present disclosure.

The magnetic powder adhesion apparatus 14 is an apparatus that applies a magnetic powder liquid to the object 60 that has been magnetized by the magnetization apparatus 12, adhering magnetic powder thereto. The magnetic powder adhesion apparatus 14 is an example of a magnetic powder adhesion unit of the present disclosure.

The rotation mechanism 16 is a mechanism for rotating the object 60 relative to an optical axis (that is, an image capture direction) of the image capture apparatus 22, which is described below. In the present exemplary embodiment, the rotation mechanism 16 rotates the object 60 about a rotation axis that is a central axis of the cylindrical object 60 in a direction orthogonal to the optical axis of the image capture apparatus 22.

The illumination apparatus 18 illuminates a space containing the object 60 with ultraviolet light. For example, the illumination apparatus 18 may be a ring-shaped illumination apparatus that emits ultraviolet light. The illumination apparatus 18 is disposed coaxially with the image capture apparatus 22 that is described below so as to illuminate ultraviolet light on a range encompassing a range of image capture by the image capture apparatus 22. When the illumination apparatus 18 and image capture apparatus 22 are disposed to be coaxial and a diffusion film is provided at a surface of the illumination apparatus 18, or the like, the ultraviolet light from the illumination apparatus 18 is illuminated uniformly on the illumination range. The illumination apparatus 18 is an example of an illumination unit of the present disclosure.

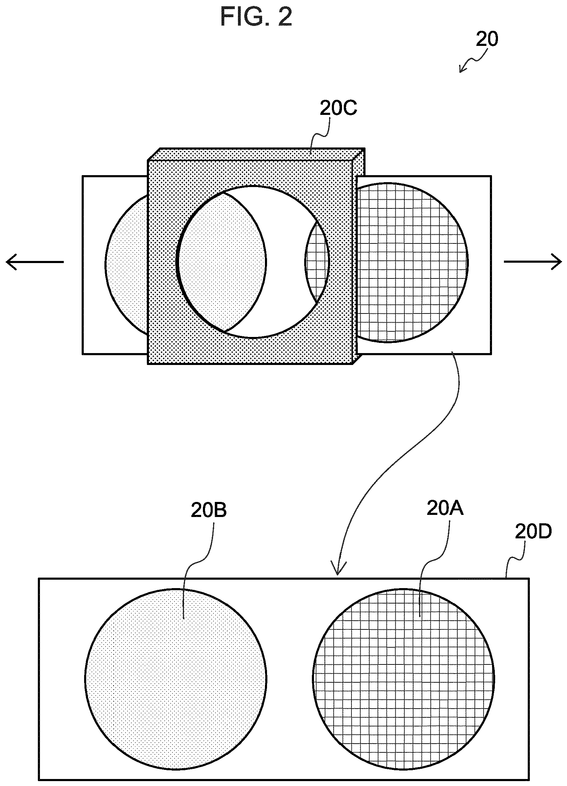

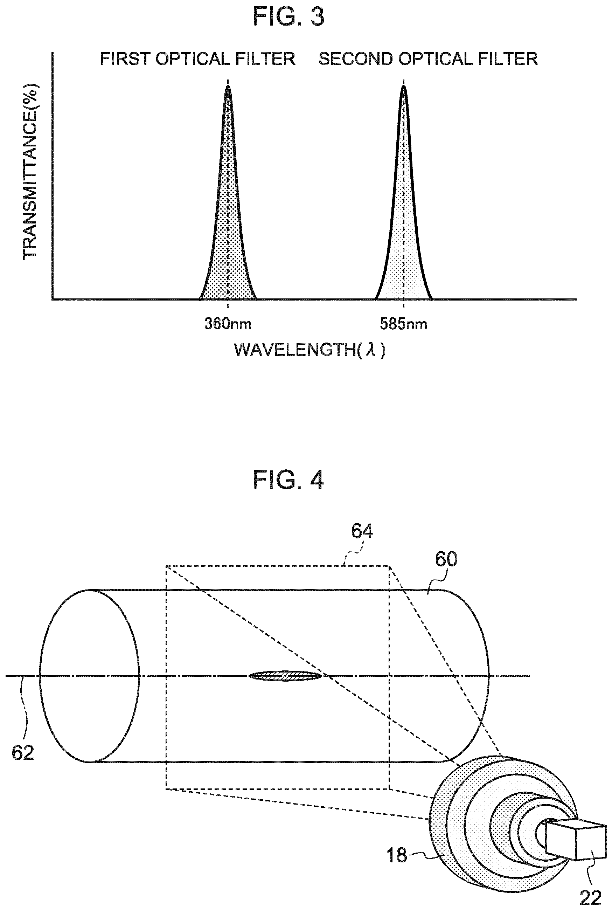

The filter apparatus 20 includes a first optical filter, a second optical filter and a switching mechanism. Fig. 2 shows an example of the filter apparatus 20 that switches between the two filters, with a sliding system. A first optical filter 20A is a bandpass filter that transmits first wavelengths, which are wavelengths of ultraviolet light that the illumination apparatus 18 uses for illumination. The center of the first wavelengths is a central band wavelength of an ultraviolet light band. More specifically, the first optical filter 20A transmits light with wavelengths in a range of around 360 nm ±15 nm. A second optical filter 20B is a bandpass filter that transmits second wavelengths, which are wavelengths of excitation light from the magnetic particles undergoing excitation by the ultraviolet light. The center of the second wavelengths is a central band wavelength of a magnetic particle emission light band. More specifically, the second optical filter 20B transmits light with wavelengths in a range of around 585 nm ±15 nm. Fig. 3 shows an example of transmission properties of the first optical filter 20A and the second optical filter 20B. The first optical filter 20A and second optical filter 20B are disposed side by side in a sheet-shaped filter unit 20D.

A switching mechanism 20C moves the filter unit 20D including the first optical filter 20A and second optical filter 20B by a driving mechanism including a motor and actuator or the like. The switching mechanism 20C slides the filter unit 20D such that the first optical filter 20A or the second optical filter 20B is set at a position of an aperture portion corresponding with a lens surface of the image capture apparatus 22 described below. Fig. 2 depicts an example of the filter apparatus 20 that switches between the two filters with a sliding system, but a filter apparatus that switches between the two filters with a rotary system may also be employed. In a rotary-system filter apparatus, the first optical filter 20A and second optical filter 20B are provided at positions at different angles with respect to the center of a circular filter unit 20D, and each filter is changed by being set to a position of an aperture portion by rotation of the filter unit 20D.

The image capture apparatus 22 is a camera capable of capturing images of an inspected surface of the object 60 as monochrome or color captured images. The image capture apparatus 22 may be a two-dimensional camera in which imaging elements of, for example, a charge-coupled device (CCD), complementary metal oxide semiconductor (CMOS) or the like are two-dimensionally arrayed. In the present exemplary embodiment, as illustrated in Fig. 4, the image capture apparatus 22 is disposed such that the optical axis is in a directional orthogonal to a rotation axis 62 of the object 60 that is rotated by the rotation mechanism 16 (not shown in Fig. 4). That is, the image capture apparatus 22 is disposed such that the optical axis coincides with the perpendicular direction of the inspected surface of the object 60, and the image capture apparatus 22 captures images of an imaging range 64 that is a range encompassing the inspected surface. The image capture apparatus 22 is disposed so as to be coaxial with the above-mentioned illumination apparatus 18. Because the image capture apparatus 22 and the illumination apparatus 18 are coaxial, imaging sensitivity may be close to a maximum.

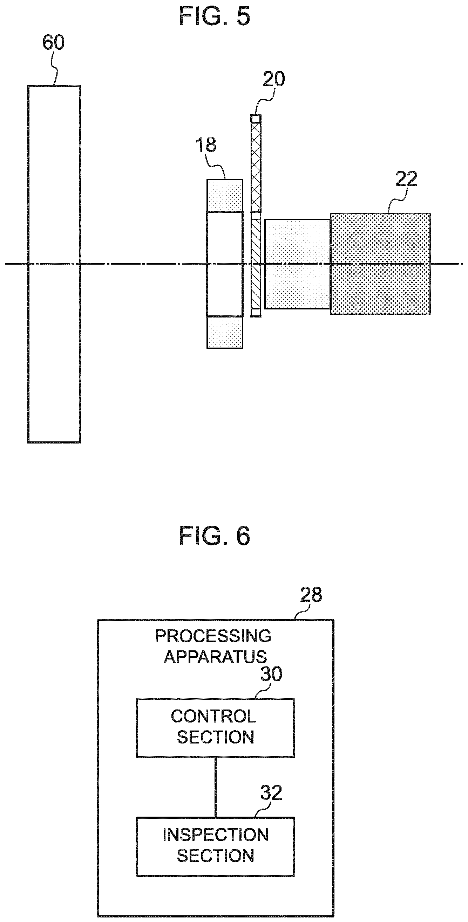

Fig. 5 is a schematic plan view showing positional relationships between the object 60, the illumination apparatus 18, the filter apparatus 20 and the image capture apparatus 22. The illumination apparatus 18 and the filter apparatus 20 are disposed between the image capture apparatus 22 and the object 60. Accordingly, the image capture apparatus 22 captures, via the first optical filter 20A, an image of a surface of the object 60 to which magnetic powder has been adhered, in the space illuminated with ultraviolet light by the illumination apparatus 18, and generates an image for normal inspection (below referred to as a "normal inspection image"). The image capture apparatus 22 also captures, via the second optical filter 20B, an image of the surface of the object 60 to which the magnetic powder has been adhered, in the space illuminated with ultraviolet light by the illumination apparatus 18, and generates an image for magnetic particle inspection (below referred to as a "magnetic particle inspection image"). The normal inspection image is an example of a first captured image of the present disclosure, and the magnetic particle inspection image is an example of a second captured image of the present disclosure.

Because the wavelengths used for image capture differ between the magnetic particle inspection and the normal inspection, the image capture apparatus 22 generates the two images using the first optical filter 20A and the second optical filter 20B that are bandpass filters as described above.

In a normal inspection according to the present exemplary embodiment, the object 60 is illuminated with the ultraviolet light and the first surface property that is visible at the surface of the object 60 is inspected on the basis of shading that appears on the surface of the object 60. However, because the magnetic powder is adhered to the object 60, when illuminated with the ultraviolet light the magnetic powder undergoes excitation and emits light, and this emitted light may be an impediment to the desired inspection of the first surface property based on the ultraviolet light. Meanwhile, in a magnetic particle inspection according to the present exemplary embodiment, the second surface property, which is visually identifiable by magnetic particle inspection, is inspected on the basis of the excitation light from the magnetic powder. However, the ultraviolet light that causes this excitation light may be an impediment to the desired inspection of the second surface property based on the excitation light.

Therefore, the second optical filter 20B that is used for the magnetic particle inspection is a filter that transmits light in a frequency band with a central wavelength band of 585 nm and, conversely, does not transmit light in the ultraviolet light frequency band, such that the ultraviolet light does not impede the inspection. Thus, detection of light other than light emitted from magnetic powder blemishes is suppressed. Therefore, because base noise may be reduced and light emitted from magnetic powder blemishes may be clearly perceived, contrast in the magnetic particle inspection image may be raised.

Meanwhile, the first optical filter 20A that is used for the normal inspection is a filter that transmits light in a frequency band with a central wavelength band of 360 nm and, conversely, does not transmit light in the frequency band of the excitation light from the magnetic powder, such that the excitation light does not impede the inspection. Thus, detection of light from magnetic powder blemishes with strong magnetic particle light emission intensity is suppressed. Therefore, normal defects and magnetic powder blemishes may be distinguished and a normal inspection image that is suitable for inspection of normal defects may be generated. Furthermore, because the first optical filter 20A is used for the normal inspection image, a normal inspection image may be captured in which only the ultraviolet light is detected, with reductions in brightness being caused by shadows due to ultraviolet illumination from damage regions and scattered reflections from base material surface portions.

The marking apparatus 24 is an apparatus for marking the surface of the object 60. The marking apparatus 24 may be, for example, a robot arm holding a drawing tool at a distal end. With this structure, the marking apparatus 24 draws designated symbols, characters, icons and the like at designated positions of the surface of the object 60, for example, positions at which occurrences of concern of the first surface property and the second surface property are detected. Hence, locations of the surface of the object 60 that are concerns for quality of the product being fabricated may be easily checked.

The repair apparatus 26 is an apparatus for repairing the surface of the object 60. For example, the repair apparatus 26 may be a robot arm holding a grinder at a distal end. With this structure, the repair apparatus 26 performs polishing and the like of designated locations of the surface of the object 60, for example, locations at which marks or the like have been drawn by the marking apparatus 24. Accordingly, problems at the surface of the object 60 may be removed by polishing locations of the surface of the object 60 that are concerns for quality, and the surroundings of these locations.

The processing apparatus 28 is a functional unit that conducts various controls relating to the surface inspection device 10 and carries out various calculations relating to inspection of the object 60. The processing apparatus 28 is realized by a computer with the hardware structures described below. Functionally, the processing apparatus 28 includes a control section 30 and an inspection section 32 as shown in Fig. 6.

The control section 30 controls each of the magnetization apparatus 12, the magnetic powder adhesion apparatus 14, the rotation mechanism 16, the illumination apparatus 18, the filter apparatus 20, the image capture apparatus 22, the marking apparatus 24 and the repair apparatus 26.

More specifically, when an inspection begins, the control section 30 controls the magnetization apparatus 12 and the magnetic powder adhesion apparatus 14 to operate, magnetizes the object 60, and causes the magnetic powder to be adhered to the surface of the object 60. Along with the start of inspection, the control section 30 operates the rotation mechanism 16 and causes the object 60 to rotate. Also along with the start of inspection, the control section 30 turns on the illumination apparatus 18 and starts the illumination of ultraviolet light. Until the inspection ends, the illumination apparatus 18 continues in the on state. In other words, the inspection environment may be kept as the same environment from the start to the end of inspection.

By controlling the filter apparatus 20, the control section 30 causes the switching mechanism 20C to set one of the first optical filter 20A and the second optical filter 20B, such that the first optical filter 20A or second optical filter 20B is disposed directly in front of the lens surface of the image capture apparatus 22. The control section 30 also causes the switching mechanism 20C to switch the filter disposed in front of the lens surface to the other of the first optical filter 20A and second optical filter 20B at intervals of a predetermined period of rotation of the object 60. The control section 30 may synchronize timings of various controls by acquiring periods of rotation of the object 60, from a rotary encoder or the like provided at the rotation mechanism 16.

The control section 30 causes the image capture apparatus 22 to generate a normal inspection image and a magnetic particle inspection image covering the whole periphery of the object 60 by capturing images of inspected areas of the surface of the object 60 in synchronization with the predetermined period of rotation of the object 60. Then the control section 30 acquires the normal inspection image and magnetic particle inspection image generated by the image capture apparatus 22.

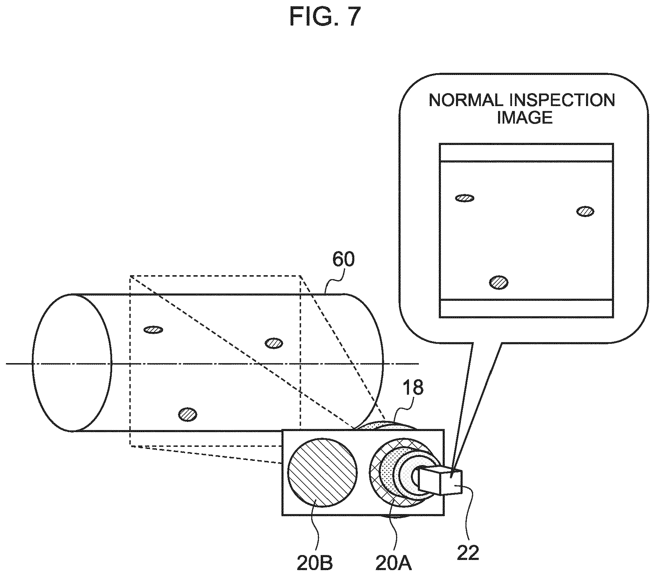

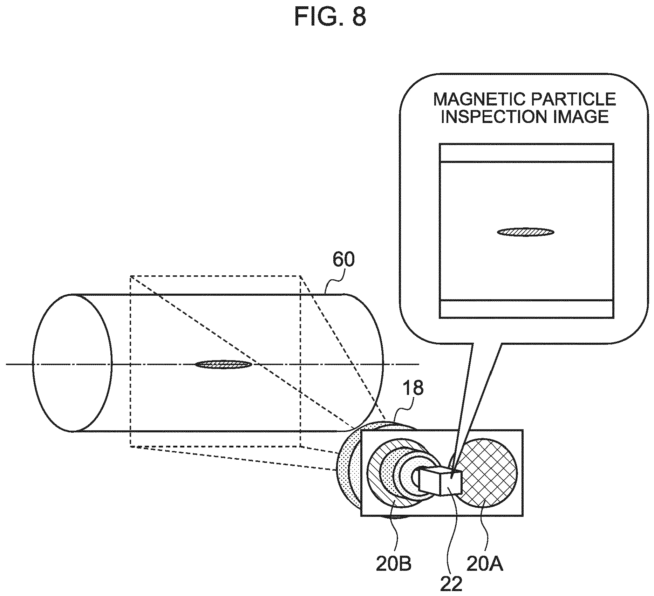

To be specific, a pitch of rotation that replaces the image capture range encompassing the inspected area of the object 60 is set as a unit pitch for the image capture apparatus 22. For example, when four image captures during one full rotation of the object 60 are necessary to cover the inspected area over the whole periphery of the object 60, the unit pitch is 90°. At intervals of the unit pitch of rotation of the object 60, the control section 30 causes the switching mechanism 20C to set the first optical filter 20A as shown in Fig. 7 and causes the image capture apparatus 22 to capture a normal inspection image. At the same unit pitch interval, the control section 30 causes the switching mechanism 20C to switch the set filter from the first optical filter 20A to the second optical filter 20B as shown in Fig. 8 and causes the image capture apparatus 22 to capture a magnetic powder inspection image. That is, the control section 30 controls the image capture apparatus 22 so as to perform image capture twice at each unit pitch interval of rotation of the object 60.

Alternatively, the control section 30 causes the image capture apparatus 22 to capture a plural number (when the unit pitch is the above-mentioned 90°, four) of normal inspection images in the state in which the first optical filter 20A is set, that is, the state shown in Fig. 7, at the unit pitch over a full rotation of the object 60. Then the control section 30 causes the switching mechanism 20C to switch the set filter from the first optical filter 20A to the second optical filter 20B, and the control section 30 causes the image capture apparatus 22 to capture a plural number (when the unit pitch is the above-mentioned 90°, four) of magnetic particle inspection images in the state in which the second optical filter 20B is set, that is, the state shown in Fig. 8, at the unit pitch over a full rotation of the object 60. That is, the control section 30 controls the switching mechanism 20C so as to switch between the first optical filter 20A and the second optical filter 20B each time the object 60 makes a full rotation, and the control section 30 controls the image capture apparatus 22 so as to acquire normal inspection images and magnetic particle inspection images in the number corresponding to a complete rotation while the object 60 rotates through two rotations.

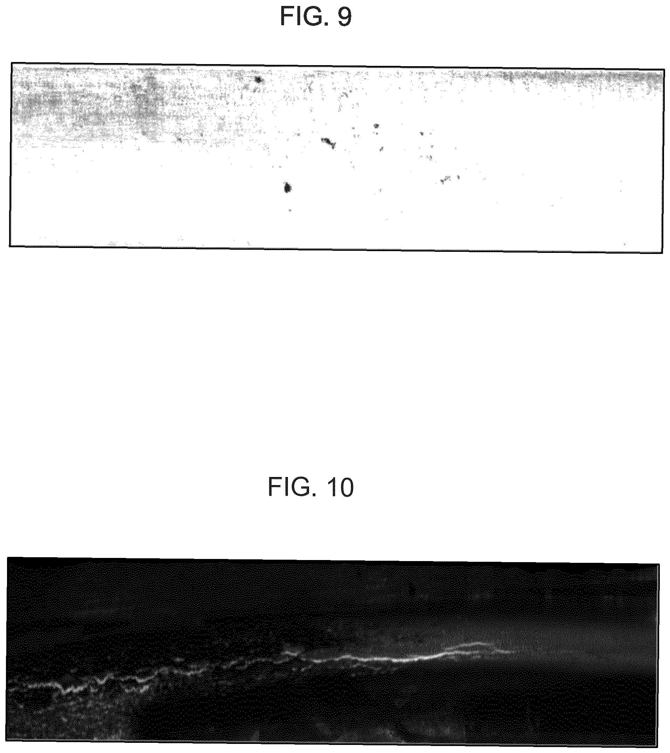

Thus, by switching between the first optical filter 20A and the second optical filter 20B, normal inspection images and magnetic particle inspection images may be acquired in the same environment in which ultraviolet light is being illuminated by the illumination apparatus 18. The control section 30 joins together the normal inspection images captured at the respective unit pitches during one rotation or two rotations to acquire a normal inspection image corresponding to a full rotation of the object 60. Similarly, the control section 30 joins together the magnetic particle inspection images captured at the respective unit pitches during one rotation or two rotations to acquire a magnetic particle inspection image corresponding to a full rotation of the object 60. From an actual sample, an example of a normal inspection image is shown in Fig. 9 and an example of a magnetic particle inspection image is shown in Fig. 10.

The control section 30 then controls the marking apparatus 24 so as to make marks at positions on the surface of the object 60 that correspond to positions representing inspection results from the inspection section 32, which is described below. More specifically, the control section 30 identifies positions of defects on the surface of the object 60 based on defect positions extracted from the images (normal defects and magnetic powder blemishes), pitches obtained from the rotary encoder or the like of the rotation mechanism 16, and information on the size of the object 60 and the like. The control section 30 then reports the identified defect positions to the marking apparatus 24 together with information distinguishing whether the defects are detected in the magnetic particle inspection or the normal inspection, and controls the marking apparatus 24 so as to conduct marking at the defect locations. As information to distinguish the defects, colors, types or the like of the marks indicating the defect locations may be made different, and characters, symbols or the like representing each of magnetic particle inspection and normal inspection may be drawn in vicinities of the marks indicating the defect locations.

The control section 30 then controls the repair apparatus 26 so as to perform repairs on the surface of the object 60 by reference to the marked locations.

The inspection section 32 conducts an inspection of visible normal defects on the surface of the object, that is, the normal inspection, on the basis of the normal inspection image acquired by the control section 30. The inspection section 32 also conducts an inspection of magnetic powder blemishes on the surface of the object 60 that are visually identifiable by magnetic particle inspection, that is, the magnetic particle inspection, on the basis of the magnetic particle inspection image acquired by the control section 30.

More specifically, the inspection section 32 carries out predetermined preprocessing, such as shading, smoothing and the like, on each of the normal inspection image and the magnetic particle inspection image. The inspection section 32 binarizes each of the preprocessed normal inspection image and the magnetic particle inspection image in accordance with predetermined threshold values. The threshold values may be set by prior experimentation in accordance with types of the object 60 and the like. Then, by predetermined processing, the inspection section 32 removes noise components from each of the binarized normal inspection image and magnetic particle inspection image. Thus, detection results are obtained in which regions of normal defects are extracted from the normal inspection image and regions of magnetic powder blemishes are extracted from the magnetic particle inspection image.

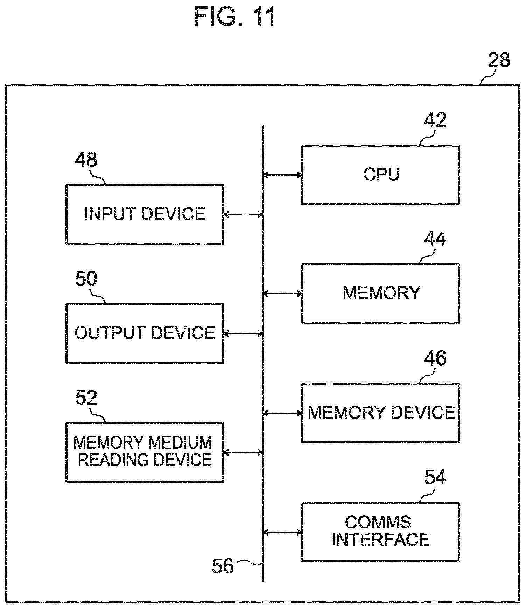

The processing apparatus 28 is structured by a computer. Fig. 11 is a block diagram showing hardware structures of the processing apparatus 28. As shown in Fig. 11, the processing apparatus 28 includes a central processing unit (CPU) 42, memory 44, a memory device 46, an input device 48, an output device 50, a memory medium reading device 52 and a communications interface (I/F) 54. These structures are connected to be capable of communicating with one another via a bus 56.

The memory device 46 stores a program for executing surface inspection processing, which is described below. The CPU 42 is a central arithmetic processing unit, which executes various programs and controls various structures. That is, the CPU 42 reads the program from the memory device 46 and executes the program using the memory 44 as a work area. The CPU 42 conducts control of the above-mentioned structures and various computations in accordance with the program memorized at the memory device 46.

The memory 44 is structured by random access memory (RAM) and serves as the work area, temporarily memorizing the program and data. The memory device 46 is structured by read-only memory (ROM), a hard disk drive (HDD), a solid state drive (SSD) or the like. The memory device 46 stores various programs, including an operating system, and various kinds of data.

The input device 48 is equipment for conducting various kinds of input such as, for example, a keyboard and mouse or the like. The output device 50 is equipment for outputting various kinds of information such as, for example, a display and a printer or the like. When a touch panel display is employed as the output device 50, the touch panel display may also function as the input device 48.

The memory medium reading device 52 reads data memorized at various types of memory medium, such as a compact disc (CD)-ROM, digital versatile disc (DVD)-ROM, Blu-ray disc, universal serial bus (USB) memory or the like, and writes data to the memory medium and so forth. The communications interface 54 is an interface for communicating with other equipment using a standard such as, for example, Ethernet (registered trademark), FDDI, Wi-Fi (registered trademark) or the like.

### - Description of surface inspection method -

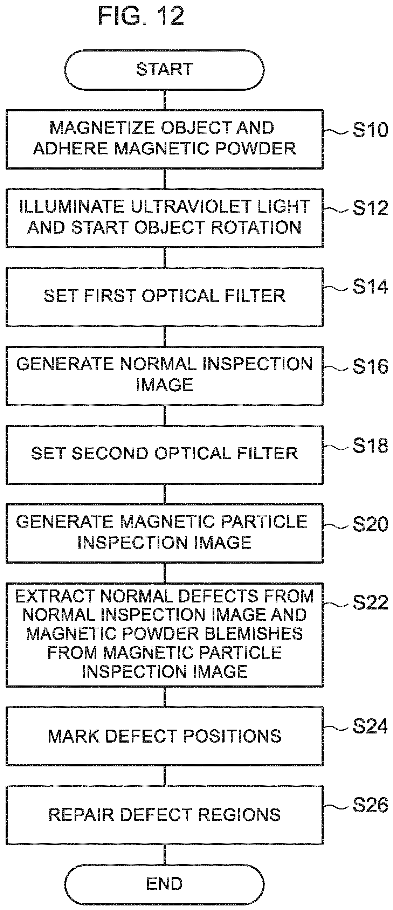

Fig. 12 is a flowchart showing a flow of surface inspection processing that is executed by the CPU 42 of the processing apparatus 28. By reading the program for executing the surface inspection processing from the memory device 46, loading the program into the memory 44 and executing the program, the CPU 42 functions as the functional structures of the processing apparatus 28 and executes the surface inspection processing shown in Fig. 12. Thus, the surface inspection method of the surface inspection device 10 is implemented.

In step S10, the control section 30 controls the magnetization apparatus 12 and the magnetic powder adhesion apparatus 14 to operate. Accordingly, the magnetization apparatus 12 carries out a magnetization step to magnetize the object 60, and the magnetic powder adhesion apparatus 14 carries out a magnetic powder adhesion step to apply magnetic powder liquid to the object 60 magnetized by the magnetization apparatus 12 and adhere the magnetic powder.

Then, in step S12, the control section 30 controls the illumination apparatus 18 to turn on. Accordingly, the illumination apparatus 18 carries out an illumination step to illuminate the space containing the object 60 with ultraviolet light. The control section 30 also controls the rotation mechanism 16 to operate. Accordingly, the rotation mechanism 16 carries out a rotation step to rotate the object 60 about the rotation axis that is the central axis of the cylindrical object 60.

In step S14, the control section 30 controls the filter apparatus 20 to cause the switching mechanism 20C to set the first optical filter 20A directly in front of the lens surface of the image capture apparatus 22. Accordingly, with the driving mechanism that includes a motor and actuator or the like, the switching mechanism 20C slides the first optical filter 20A so as to be disposed at the aperture portion corresponding with the lens surface of the image capture apparatus 22, setting the first optical filter 20A in front of the lens surface of the image capture apparatus 22.

In step S16, the control section 30 controls the image capture apparatus 22 so as to capture images of the inspected area of the surface of the object 60 in synchronization with the predetermined period of rotation of the object 60. Accordingly, the image capture apparatus 22 carries out a portion of an image capture step to capture images, via the first optical filter 20A, of the surface of the object 60 to which the magnetic powder has been adhered in the space that is illuminated with ultraviolet light by the illumination apparatus 18, and generate a normal inspection image.

In step S18, the control section 30 controls the filter apparatus 20 to cause the switching mechanism 20C to set the second optical filter 20B directly in front of the lens surface of the image capture apparatus 22. Accordingly, with the driving mechanism including the motor and actuator or the like, the switching mechanism 20C slides the second optical filter 20B so as to be disposed at the aperture portion corresponding with the lens surface of the image capture apparatus 22, setting the second optical filter 20B in front of the lens surface of the image capture apparatus 22.

In step S20, the control section 30 controls the image capture apparatus 22 so as to capture images of the inspected area of the surface of the object 60 in synchronization with the predetermined period of rotation of the object 60. Accordingly, the image capture apparatus 22 carries out another portion of the image capture step to capture images, via the second optical filter 20B, of the surface of the object 60 to which the magnetic powder has been adhered in the space that is illuminated with ultraviolet light by the illumination apparatus 18, and generate a magnetic particle inspection images.

In step S22, the inspection section 32 carries out an inspection step, applying the predetermined preprocessing, binarization processing and noise removal processing to each of the normal inspection image and the magnetic particle inspection image, extracting regions of normal defects from the normal inspection image and extracting regions of magnetic particle blemishes from the magnetic particle inspection image.

In step S24, the control section 30 reports defect locations (normal defects and magnetic particle blemishes) to the marking apparatus 24 together with information distinguishing which defects are detected by the magnetic particle inspection and the normal inspection, and the control section 30 controls the marking apparatus 24 so as to conduct marking at the defect locations. Accordingly, the marking apparatus 24 conducts marking of the defect locations at designated positions of the surface of the object 60 in a state that enables distinguishing between the respective defects detected by magnetic particle inspection and normal inspection.

In step S26, the control section 30 controls the repair apparatus 26 so as to perform repairs on the surface of the object 60 by reference to the marked positions. Accordingly, the repair apparatus 26 performs polishing or the like at the designated positions of the surface of the object 60 with a grinder or such. Then the surface inspection processing is ended.

### - Operation and effects of the surface inspection device -

As described above, the surface inspection device according to the present exemplary embodiment magnetizes an object to be inspected, applies a magnetic powder liquid and adheres magnetic powder, and illuminates a space containing the object with ultraviolet light. The surface inspection device includes the first optical filter that transmits a first wavelength, which is a wavelength of ultraviolet light, and the second optical filter that transmits a second wavelength, which is a wavelength of excitation light from the magnetic powder undergoing excitation by the ultraviolet light. In the space illuminated with the ultraviolet light, the surface inspection device captures images, via the first optical filter, of the surface of the object to which the magnetic powder is adhered to generate a normal inspection image, and captures images, via the second optical filter, of the surface of the object to which the magnetic powder is adhered to generate a magnetic particle inspection image. On the basis of the normal inspection image, the surface inspection device inspects visible normal defects at the surface of the object and, on the basis of the magnetic particle inspection image, the surface inspection device inspects magnetic powder blemishes that are visually identifiable by magnetic particle inspection of the surface of the object. Thus, the surface inspection device may integrate and carry out a magnetic particle inspection and a normal inspection in the same environment.

That is, according to the surface inspection device according to the present exemplary embodiment, magnetic particle inspection and normal inspection-two kinds of inspection that are conventionally carried out in separate steps due to the characteristics of magnetic particle inspection-may be carried out at the same time in the same environment, which is advantageous in terms of costs and use of space.

According to the surface inspection device according to the present exemplary embodiment, a normal inspection image and a magnetic particle inspection image, which are images of different wavelengths from two kinds of inspection, are acquired in a single surface inspection process. Therefore, normal defects and magnetic powder blemishes may be distinguished and locations of the respective defects may be identified.

According to the surface inspection device according to the present exemplary embodiment, the fact that the normal inspection can be carried out with just illumination of the ultraviolet light that is used for excitation in the magnetic particle inspection is advantageous. In the method according to the exemplary embodiment that is described above, plural illumination apparatuses and plural image capture apparatuses are not required for the magnetic particle inspection and the normal inspection. Therefore, image capture of both the magnetic particle inspection image and the normal inspection image may be implemented with a single structure, which is advantageous for simplification of the equipment.

### - First variant example -

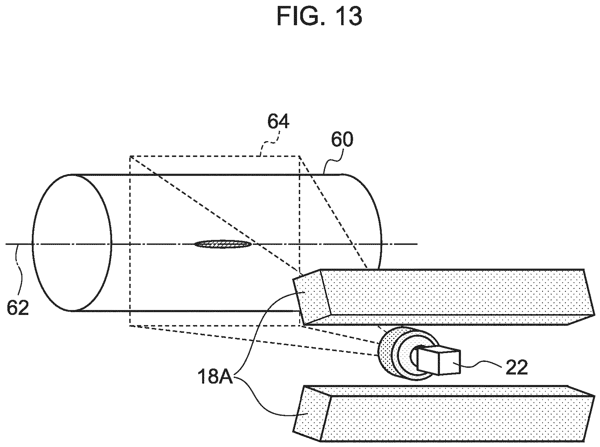

Fig. 13 shows a portion of general structures of a first variant example. In the exemplary embodiment described above, a structure in which the illumination apparatus 18 is ring-shaped is described, but the first variant example has a structure equipped with a line-shaped illumination apparatus 18A. The example in Fig. 13 depicts an example in which two of the line shaped illumination apparatus 18A are arranged horizontally above and below the image capture apparatus 22. Depending on the size and shape of the object 60, the object 60 may be illuminated from even more directions. The exemplary embodiment described above and the first variant example have structures in which light is projected onto the inspected surface of the object 60 in perpendicular directions but, depending on the shape of the object and types of defects and the like, this is not limiting. Furthermore, shapes of the illumination apparatus 18 are not limited to ring shapes and line shapes, and shapes of the object 60 are not limited to cylindrical shapes. Depending on the shape of the object 60, the images may be acquired without the object 60 being rotated, or the images may be acquired while the object 60 is being translated.

### - Second variant example -

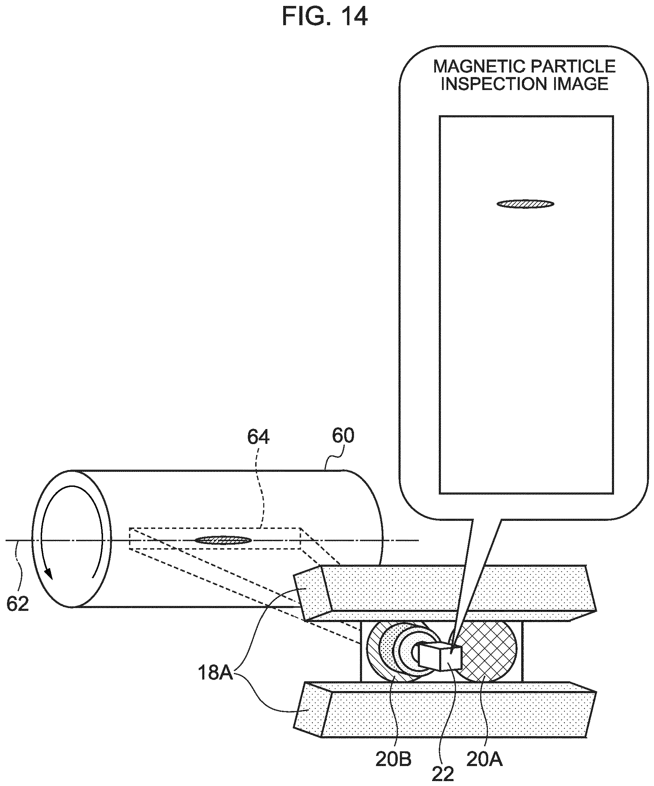

Fig. 14 shows a portion of general structures of a second variant example. The exemplary embodiment described above is described with the image capture apparatus 22 being a two-dimensional camera. The second variant example has a structure in which a one-dimensional camera in which imaging elements are arrayed in one dimension is provided to serve as the image capture apparatus 22. The example in Fig. 14 illustrates an example in which the line-shaped illumination apparatuses 18 are provided as the illumination apparatus, similarly to the first variant example. Fig. 14 shows an example in which the second optical filter 20B is set and a magnetic particle inspection image is being captured. The magnetic particle inspection image at the right side of Fig. 14 is an example in which pixels captured in individual lines are joined together over a full rotation of the object 60.

### - Third variant example -

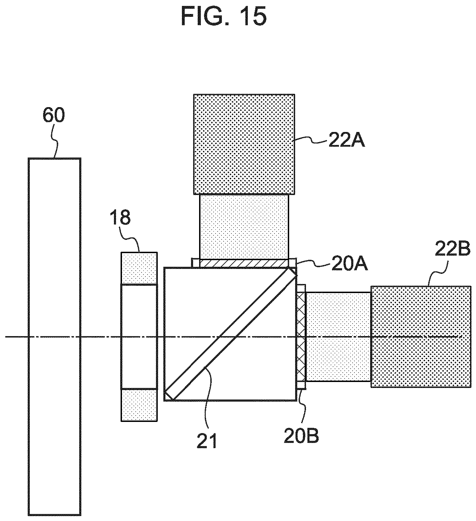

Fig. 15 is a schematic plan view showing positional relationships of structures of a portion of a third variant example. The exemplary embodiment described above is described with the normal inspection image and the magnetic particle inspection image being captured by switching between the filters. The third variant example is structured to include two image capture apparatuses 22A and 22B and a half-mirror 21. The image capture apparatus 22A is an example of a first image capture unit of the present disclosure, the image capture apparatus 22B is an example of a second image capture unit of the present disclosure, and the half-mirror 21 is an example of an optical member of the present disclosure. In the structure of the third variant example, reflected light and excitation light from the surface of the object 60 to which magnetic powder is adhered in the space illuminated with ultraviolet light are divided into two beams by the half-mirror 21, with one light beam being incident on the image capture apparatus 22A via the first optical filter 20A, and the other divided light beam being incident on the image capture apparatus 22B via the second optical filter 20B. Thus, a normal inspection image is captured at the image capture apparatus 22A and a magnetic particle inspection image is captured at the image capture apparatus 22B. According to the structure of the third variant example, the normal inspection image and the magnetic particle inspection image may be captured simultaneously

### - Fourth variant example -

The exemplary embodiment described above is described with a sequence of tasks from magnetization of the object 60 to repair after inspection being automated. However, in a fourth variant example, some of the series of tasks may include manual tasks. For example, repairs of the surface of the object 60 may be carried out manually on the basis of the marking implemented by the marking apparatus 24. As a further example, the processing apparatus 28 may output detection results extracting defects from the images by display at a display device or the like, and an inspector may check the display and conduct marking on the object 60.

Above, examples of the present disclosure have been described, but the present disclosure is not limited by these descriptions and it will be clear that numerous modifications beyond these descriptions may be embodied within a technical scope not departing from the gist of the invention.

The disclosures of Japanese Patent Application No. 2022-066522 are incorporated into the present specification by reference in their entirety. All references, patent applications and technical specifications cited in the present specification are incorporated by reference into the present specification to the same extent as if the individual references, patent applications and technical specifications were specifically and individually recited as being incorporated by reference.

## Claims

1. A surface inspection device comprising:
a magnetization unit that magnetizes an object to be inspected;
a magnetic powder adhesion unit that applies a magnetic powder liquid and causes magnetic powder to be adhered to the magnetized object;
an illumination unit that illuminates a space containing the object with ultraviolet light;
a first optical filter that transmits a first wavelength that is a wavelength of the ultraviolet light;
a second optical filter that transmits a second wavelength that is a wavelength of excitation light of the magnetic powder undergoing excitation by the ultraviolet light;
an image capture unit that captures an image of a surface of the object to which the magnetic powder is adhered, in the space illuminated with the ultraviolet light, via the first optical filter and generates a first captured image, and that captures an image of the surface of the object to which the magnetic powder is adhered via the second optical filter and generates a second captured image; and
an inspection unit that inspects a first surface property of the surface of the object based on the first captured image, the first surface property being visible, and inspects a second surface property of the surface of the object based on the second captured image, the second surface property being visually identifiable by magnetic particle inspection.

2. The surface inspection device according to claim 1, further comprising a rotation mechanism that causes the object to rotate about a rotation axis in a direction orthogonal to an optical axis of the image capture unit,
wherein, at intervals of a predetermined period of the rotation of the object by the rotation mechanism, the image capture unit switches between:
processing that captures the image of the object to which the magnetic powder is adhered via the first optical filter and generates the first captured image, and
processing that captures the image of the object to which the magnetic powder is adhered via the second optical filter and generates the second captured image.

3. The surface inspection device according to claim 1 or claim 2, wherein the image capture unit comprises:
a first image capture unit that generates the first captured image;
a second image capture unit that generates the second captured image; and
an optical member that causes reflected light from the surface of the object to which the magnetic powder is adhered, in the space illuminated with the ultraviolet light, to be incident on the first image capture unit via the first optical filter, and that causes excitation light from the surface of the object to which the magnetic powder is adhered to be incident on the second image capture unit via the second optical filter.

4. A surface inspection method comprising:
a magnetization step of magnetizing an object to be inspected;
a magnetic powder adhesion step of applying a magnetic powder liquid and causing magnetic powder to be adhered to the magnetized object;
an illumination step of illuminating a space containing the object with ultraviolet light;
an image capture step of generating a first captured image and a second captured image, including:
using a first optical filter that transmits a first wavelength that is a wavelength of the ultraviolet light, a second optical filter that transmits a second wavelength that is a wavelength of excitation light of the magnetic powder undergoing excitation by the ultraviolet light, and an image capture unit, and
capturing an image of a surface of the object to which the magnetic powder is adhered, in the space illuminated with the ultraviolet light, via the first optical filter for generating the first captured image, and capturing an image of the surface of the object to which the magnetic powder is adhered via the second optical filter for generating the second captured image; and
an inspection step of inspecting a first surface property of the surface of the object based on the first captured image, the first surface property being visible, and inspecting a second surface property of the surface of the object based on the second captured image, the second surface property being visually identifiable by magnetic particle inspection.

5. The surface inspection method according to claim 4, further comprising a rotation step of causing the object to rotate about a rotation axis in a direction orthogonal to an optical axis of the image capture unit,
wherein the image capture step includes, at intervals of a predetermined period of the rotation of the object by the rotation step, switching between:
processing that captures the image of the object to which the magnetic powder is adhered via the first optical filter and generates the first captured image, and
processing that captures the image of the object to which the magnetic powder is adhered via the second optical filter and generates the second captured image.

6. The surface inspection method according to claim 4 or claim 5, wherein:
the image capture unit includes:
a first image capture unit that generates the first captured image, and
a second image capture unit that generates the second captured image; and the image capture step includes:
using an optical member,
causing reflected light from the surface of the object to which the magnetic powder is adhered, in the space illuminated with the ultraviolet light, to be incident on the first image capture unit via the first optical filter,
causing excitation light from the surface of the object to which the magnetic powder is adhered to be incident on the second image capture unit via the second optical filter, and
generating the first captured image and the second captured image.
